# EUROPÄISCHE PATENTSCHRIFT

(11) **EP 2 724 401 B1**
(45) Veröffentlichungstag und Bekanntmachung des Hinweises auf die Patenterteilung: **20.05.2015**
(21) Anmeldenummer: 12753730.6
(22) Anmeldetag: 03.09.2012
(51) Int. Cl.: H01M 4/36, H01M 4/38, H01M 4/52, H01M 4/80, H01M 10/39, H01M 4/02

(54) **SPEICHERELEMENT**
STORAGE ELEMENT
ÉLÉMENT ACCUMULATEUR

(30) Priorität: 27.09.2011 DE 102011083542
(43) Veröffentlichungstag der Anmeldung: 30.04.2014
(73) Patentinhaber: Siemens Aktiengesellschaft, 80333 München (DE)
(72) Erfinder: BENKERT, Katrin, 90571 Schwaig (DE); SCHUH, Carsten, 85598 Baldham (DE); SOLLER, Thomas, 94405 Landau/Isar (DE)
(86) Internationale Anmeldenummer: PCT/EP2012/067131
(87) Internationale Veröffentlichungsnummer: WO 2013/045218

(56) Entgegenhaltungen:
- EP-A1- 1 513 214
- WO-A2-98/19351
- DE-A1- 4 129 553
- US-A- 2 627 531
- US-A1- 2006 204 830

## Beschreibung

Die Erfindung betrifft ein Speicherelement für eine Festelektrolyt-Batterie nach dem Oberbegriff von Patentanspruch 1.

Festelektrolyt-Batterien sind nach Art einer Festoxidbrennstoffzelle aufgebaut und weisen zusätzlich keramische Speicherelemente auf, in welche Partikel aus einem Metall und/oder einem Metalloxid eingelagert sind, wobei das Metall und das Metalloxid zusammen ein Redoxpaar bilden.

Im Ladebetrieb einer derartigen Batterie wird der Brennstoffzellenteil der Batterie im Elektrolysemodus betrieben, so dass Wasserstoff gebildet wird, der das Metalloxid zum jeweils zugeordneten Metall reduzieren kann. Zur Energieentnahme wird das Metall wieder elektrochemisch zum entsprechenden Oxid oxidiert, wozu Luftsauerstoff verwendet wird. Die entstehende elektrische Energie kann an den Elektroden der Batterie abgenommen werden. Die Batterie wird dabei bei relativ hohen Temperaturen von bis zu 900 °C betrieben.

Der Oxidationsmechanismus im Entladebetrieb einer derartigen Batterie beruht vorwiegend auf kationischer Diffusion. Dies führt insbesondere beim Entladen zu einer sukzessiven Migration des Speichermetalls in Richtung der Sauerstoffquelle, da beim zugrunde liegenden Oxidationsprozess die Diffusion der Metallspezies in die Reaktionszone schneller erfolgt als der entsprechende Transport der Sauerstoffspezies. Der resultierende Massefluss auf die Oxidationsquelle hin führt zu einer kontinuierlichen Veränderung der Speicherstruktur und begünstigt die Versinterung bzw. Agglomeratbildung der ursprünglich vorhandenen reaktiven Metallpartikel. Hierdurch nimmt die aktive Oberfläche der Metallpartikel ab, was sich in einer sich kontinuierlich verändernden Lade- und Entladecharakteristik sowie in einer Abnahme der Nutzkapazität niederschlägt.

US 2 627 531 A offenbart ein gesintertes Element gemäß Stand der Technik.

Der vorliegenden Erfindung liegt somit die Aufgabe zugrunde, ein Speicherelement nach dem Oberbegriff von Patentanspruch 1 bereitzustellen, welches gegenüber strukturellen Veränderungen aufgrund von Metallionendiffusion besonders stabil ist und seine Nutzkapazität möglichst lange behält.

Diese Aufgabe wird durch ein Speicherelement mit den Merkmalen des Patentanspruchs 1 gelöst.

Ein derartiges Speicherelement für eine Festelektrolyt-Batterie umfasst einen Grundkörper aus einer porösen Matrix gesinteter Keramikpartikel, in welche Partikel aus einem Metall und/oder einem entsprechenden Metalloxid, welche zusammen ein Redoxpaar bilden, eingelagert sind. Erfindungsgemäß ist dabei vorgesehen, dass die Partikel in Teilbereiche der Matrix eingelagert sind, welche jeweils durch partikelfreie Teilbereiche der Matrix voneinander getrennt sind.

Durch das Vorsehen von porösen, aber partikelfreien Teilbereichen der Matrix zwischen den aktiven Speicherkompositschichten oder -partikeln wird der im Zuge des Oxidationsprozesses entstehende Massefluss des Speichermaterials - also des Metalls - in Richtung des Sauerstoffgradienten gehemmt und kontrolliert.

Metallionen können in das Porennetzwerk des partikelfreien Teilbereichs diffundieren und sich dort an den Oberflächen als dünner Film mit einem hohen Oberflächenanteil abscheiden und somit weiterhin für die Redoxprozesse nahezu vollständig zur Verfügung stehen. Auch die üblicherweise auftretende zunehmende Versinterung und Kornvergröberung der Partikel aus dem Metall- und/oder Metalloxid während des Entladevorgangs wird hierdurch stark gehemmt und verlangsamt. Insgesamt wird somit Alterung und Degradation des Speicherelements vermieden bzw. vermindert.

In einer bevorzugten Ausführungsform der Erfindung sind partikelhaltige und partikelfreie Teilbereiche der Matrix in Form von alternierenden Schichten angeordnet. Zweckmäßigerweise weisen die alternierenden Schichten dabei jeweils eine Dicke von 0,1 mm bis 2 mm auf. Derartige Speicherelemente sind technisch besonders einfach herzustellen, beispielsweise durch Folienguss von Grünfolien aus partikelhaltigem und partikelfreiem Matrixmaterial, die in der gewünschten Weise gestapelt und anschließend zusammengesintert werden. Auch die Infiltration von porösen Skelettstrukturen aus reinem Matrixmaterial, Beschichtungsverfahren über nasschemische Routen wie beispielsweise Sol-Gel-Prozesse, elektrophoretische Abscheidung, Kopräzipitation oder dergleichen kann genutzt werden, um derartige Speicherelemente aufzubauen.

Alternativ hierzu ist es auch möglich, die partikelhaltigen Teilbereiche der Matrix in Form von Kernstrukturen auszubilden, für welche jeweils ein partikelfreier Teilbereich der Matrix eine sie umgebende Hülle ausbildet. Solche so genannte Core-Shell-Strukturen können in globulärer oder tubulärer Form vorliegen, wobei auch hier die Kernstrukturen vorzugsweise einen Durchmesser von 0,1 mm bis 2 mm aufweisen. Derartige Strukturen können ebenfalls auf prozesssichere und großserienfähige Weise hergestellt werden, beispielsweise über die Abscheidung von Fasern mit anschließender thermischer Nachbehandlung.

Ein besonders zweckmäßiges System umfasst Partikel aus Eisen oder Nickel und/oder den jeweiligen Oxiden, die ein besonders gut ausnutzbares Redoxverhalten zeigen.

Die keramische Matrix ist dabei vorzugsweise aus einer Oxidkeramik, insbesondere aus Zirkondioxid, ausgebildet. Selbstverständlich können auch andere oxidische Keramiken verwendet werden, die elektrochemisch unter den Betriebsbedingungen des Speicherelements inert sind und eine gute Beständigkeit gegenüber den üblichen Betriebstemperaturen in der Größenordnung von 900 °C zeigen.

Im Folgenden wird die Erfindung und ihre Ausführungsformen anhand der Zeichnung näher erläutert. Es zeigen:
- FIG 1: eine schematische Schnittdarstellung durch ein Ausführungsbeispiel eines erfindungsgemäßen Speicherelements mit Schichtstruktur und
- FIG 2: eine schematische Schnittdarstellung durch ein alternatives Ausführungsbeispiel eines erfindungsgemäßen Speicherelements mit Core-Shell-Struktur.

Ein im Ganzen mit 10 bezeichnetes Speicherelement zum Speichern von Energie in einer Festelektrolyt-Batterie passt eine alternierende Abfolge von Schichten 12, 14. Die Schichten 12 sind dabei aus einer porösen Oxidkeramik, beispielsweise aus Zirkonoxid gebildet. Selbstverständlich können auch andere oxidische Keramiken der Haupt- oder Nebengruppenmetalle Verwendung finden.

Die Schichten 14 weisen ebenfalls eine Matrix aus einer porösen Oxidkeramik auf, die zur Keramik der Schichten 12 identisch oder auch von dieser verschieden sein kann. In die Schichten 14 sind zusätzlich Partikel aus einem Metall bzw. dem zugehörigen Metalloxid eingelagert, welche als eigentlicher Energiespeicher für das Speicherelement 10 dienen.

In einer vollständigen Festelektrolyt-Batterie sind derartige Speicherelemente 10 mit einer Festelektrolyt-Brennstoffzelle zu einer Einheit verbunden. Im entladenen Zustand liegen die Partikel der Schichten 14 vollständig oxidiert vor. Zum Wiederaufladen der Batterie wird die Brennstoffzelle im Elektrolysemodus betrieben, so dass die Metalloxide durch entstehenden Wasserstoff bzw. Wasserstoffionen zum Metall zurückoxidiert werden.

Im Entladebetrieb, also zur Energieentnahme, werden die Metallpartikel wieder zum Metall oxidiert, wobei die freiwerdende elektrochemische Energie an den Abgriffspolen der Batterie entnommen werden kann.

Um ein möglichst großes Speichervermögen sowie eine gute und konstante Lade- bzw. Entladekinetik sicherzustellen, müssen die Partikel der Schichten 14 besonders gut verteilt sein und eine große aktive Oberfläche aufweisen. Hierbei ergibt sich nun das Problem, dass der Oxidationsbetrieb einer derartigen Brennstoffzelle vorwiegend auf kationischer Diffusion beruht, so dass beim Entladevorgang die Metallionen der in die Schichten 14 eingelagerten Partikel in Richtung der Sauerstoffquelle migrieren. Dies beruht darauf, dass die Diffusion der Metallionen in der Reaktionszone schneller erfolgt als der entsprechende Transport der Sauerstoffionen. Durch den entsprechenden Massefluss auf die Oxidationsquelle hin kommt es zu einer Abnahme der aktiven Oberfläche, insbesondere durch Versinterung bzw. Agglomeratbildung der metallischen Partikel.

Um dies zu vermeiden, sind die partikelfreien Schichten 12 vorgesehen. In den in den Figuren gezeigten Energiespeichern 10 wandern im Zuge des Entladevorgangs, also während der Oxidation, die Metallspezies in Richtung des Sauerstoffgradienten, wobei die Wanderung durch die parikelfreien Schichten 12 gehemmt bzw. kontrolliert werden. Die Metallspezies wandern in die Poren der partikelfreien Schichten 12 ein und scheiden sich dort auf den Porenoberflächen als dünner Film mit hoher Oberfläche ab, so dass sie trotz der Migration weiter für Redoxprozesse nahezu vollständig zur Verfügung stehen. Hierdurch wird die ansonsten stattfindende Versinterung und Kornvergröberung der Speicherpartikel während des Entladevorgangs stark gehemmt und verlangsamt. Auch das für Redoxprozesse zur Verfügung stehende Speichervolumen bleibt über eine höhere Anzahl an Redoxzyklen erhalten, wobei sich auch während der Alterung des Speicherelements 10 die Kinetik der Oxidations- und Reduktionssprozesse weniger verändert als bei homogen ausgebildeten Zellen.

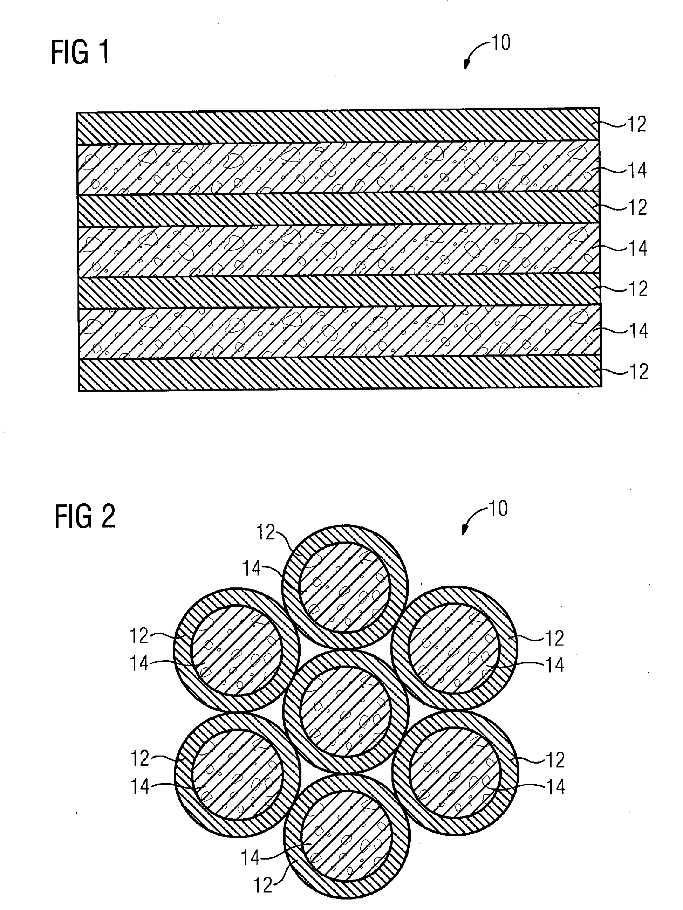

Alternativ zur Schichtstruktur gemäß FIG 1 kann auch eine so genannte Core-Shell-Struktur gemäß FIG 2 vorgesehen sein. Die partikelhaltigen Keramikmatrizes sind hier als globuläre bzw. tubuläre Strukturen ausgebildet, die ihrerseits wieder von einer porenhaltigen aber partikelfreien Schicht 12 vollständig umhüllt sind. Der Mechanismus der Kontrolle der Diffusion der Metallspezies ist in diesem Fall der gleiche wie bei Schichtstrukturen gemäß FIG 1.

Beide mögliche Strukturen des Speicherelements 10 können über übliche keramische Prozesse aufgebaut werden. Zum Aufbau von Schichtstrukturen eignet sich beispielsweise die Laminierung von Grünfolien aus partikelhaltiger und partikelfreier Kermikmatrix mit anschließendem gemeinsamen Sintern, die Infiltration von porösen Skelettstrukturen, alternierende Beschichtungsprozesse, die auch auf nasschemischen Routen, beispielsweise im Sol-Gel-Verfahren, durch elektrophoretische Abscheidung oder Kopräzipitation dargestellt werden können. Core-Shell-Strukturen können zu dem durch Faserabscheidung mit anschließender thermischer Nachbehandlung geschaffen werden.

Alle genannten Herstellungsverfahren sind prozesssicher und großserienfähig, so dass die Speicherelemente 10 auch besonders ökonomisch gefertigt werden können.

## Patentansprüche

1. Speicherelement (10) für eine Festelektrolyt-Batterie, mit einem Grundkörper aus einer porösen Matrix (10) gesinterter Keramikpartikel (12, 18), in welche Partikel (16) aus einem Metall und/oder einem Metalloxid, welche zusammen ein Redoxpaar bilden, eingelagert sind,
**dadurch gekennzeichnet, dass**
die Partikel in Teilbereiche (14) der Matrix eingelagert sind, welche jeweils durch partikelfreie Teilbereiche (12) der Matrix voneinander getrennt sind.

2. Speicherelement (10) nach Anspruch 1, **dadurch gekennzeichnet, dass** partikelhaltige (14) und partikelfreie Teilbereiche (12) der Matrix in Form von alternierenden Schichten angeordnet sind.

3. Speicherelement (10) nach Anspruch 2, **dadurch gekennzeichnet, dass** die alternierenden Schichten (12, 14) jeweils eine Dicke von 0,1 mm bis 2 mm aufweisen.

4. Speicherelement (10) nach Anspruch 1, **dadurch gekennzeichnet, dass** die partikelhaltigen Teilbereiche (14) der Matrix Kernstrukturen ausbilden, für welche jeweils ein partikelfreier Teilbereich (12) der Matrix eine sie umgebende Hülle ausbildet.

5. Speicherelement (10) nach Anspruch 4, **dadurch gekennzeichnet, dass** die Kernstrukturen (14) globulär oder tubulär ausgebildet sind.

6. Speicherelement (10) nach Anspruch 5, **dadurch gekennzeichnet, dass** die Kernstrukturen (14) einen Durchmesser von 0,1 mm bis 2 mm aufweisen.

7. Speicherelement (10) nach einem der Ansprüche 1 bis 6, **dadurch gekennzeichnet, dass** die Partikel aus Eisen oder Nickel und/oder den jeweiligen Oxiden bestehen.

8. Speicherelement (10) nach einem der Ansprüche 1 bis 7, **dadurch gekennzeichnet, dass** die keramische Matrix aus einer Oxidkeramik, insbesondere aus ZrO₂, gebildet ist.

## Claims

1. Storage element (10) for a solid electrolyte battery, with a basic body made from a porous matrix (10) of sintered ceramic particles (12, 18), into which are embedded particles (16) of a metal and/or a metal oxide which together form a redox pair, **characterized in that** the particles are embedded into subregions (14) of the matrix which are separated from one another in each case by particle-free subregions (12) of the matrix.

2. Storage element (10) according to Claim 1, **characterized in that** particle-containing (14) and particle-free (12) subregions of the matrix are arranged in the form of alternating layers.

3. Storage element (10) according to Claim 2, **characterized in that** the alternating layers (12, 14) have in each case a thickness of 0.1 mm to 2 mm.

4. Storage element (10) according to Claim 1, **characterized in that** the particle-containing subregions (14) of the matrix form core structures, for which in each case a particle-free subregion (12) of the matrix forms an envelope surrounding them.

5. Storage element (10) according to Claim 4, **characterized in that** the core structures (14) are of globular or tubular form.

6. Storage element (10) according to Claim 5, **characterized in that** the core structures (14) have a diameter of 0.1 mm to 2 mm.

7. Storage element (10) according to one of Claims 1 to 6, **characterized in that** the particles consist of iron or nickel and/or of the respective oxides.

8. Storage element (10) according to one of Claims 1 to 7, **characterized in that** the ceramic matrix is formed from an oxide ceramic, in particular from ZrO₂.

## Revendications

1. Elément accumulateur (10) pour une batterie à électrolyte solide, avec un corps de base constitué d'une matrice poreuse (10) de particules de céramique frittées (12, 18), où sont intégrées des particules (16) constituées d'un métal et/ou d'un oxyde métallique, qui forment ensemble une paire redox,
**caractérisé en ce que**
les particules sont intégrées dans des parties (14) de la matrice, lesquelles sont respectivement séparées les unes des autres par des parties exemptes de particules (12) de la matrice.

2. Elément accumulateur (10) selon la revendication 1, **caractérisé en ce que** les parties contenant des particules (14) et exemptes de particules (12) de la matrice sont agencées sous forme de couches en alternance.

3. Elément accumulateur (10) selon la revendication 2, **caractérisé en ce que** les couches en alternance (12, 14) présentent respectivement une épaisseur de 0,1 mm à 2 mm.

4. Elément accumulateur (10) selon la revendication 1, **caractérisé en ce que** les parties contenant des particules (14) de la matrice forment des structures centrales, pour lesquelles respectivement une partie exempte de particules (12) de la matrice forme une enveloppe qui l'entoure.

5. Elément accumulateur (10) selon la revendication 4, **caractérisé en ce que** les structures centrales (14) sont configurées de manière globulaire ou tubulaire.

6. Elément accumulateur (10) selon la revendication 5, **caractérisé en ce que** les structures centrales (14) présentent un diamètre de 0,1 mm à 2 mm.

7. Elément accumulateur (10) selon l'une des revendications 1 à 6, **caractérisé en ce que** les particules se composent de fer ou de nickel et/ou des oxydes respectifs.

8. Elément accumulateur (10) selon l'une des revendications 1 à 7, **caractérisé en ce que** la matrice céramique est formée par une céramique d'oxyde, en particulier par ZrO₂.
